# EUROPEAN PATENT APPLICATION

(11) **EP 2 509 200 A1**
(43) Date of publication of application: **10.10.2012**
(21) Application number: 11161754.4
(22) Date of filing: 08.04.2011
(51) Int. Cl.: H02M 1/44

(54) **Safety discharge circuit**

(71) Applicant: NXP B.V., 5656 AG Eindhoven (NL)
(72) Inventor: Strijker, Joan Wichard, Redhill, Surrey RH1 1DL (GB)
(74) Representative: Hardingham, Christopher Mark

(57) **Abstract**

A safety discharge circuit for discharging an electromagnetic interference (EMI) suppression capacitor (2), the circuit comprising an input for connection to an AC power source (1), and a triggering section adapted to detect disconnection of the AC power source (1) from the input and trigger a bi-directional thyristor switch in response, the bi-directional thyristor switch being coupled, in use, for discharging the EMI suppression capacitor (2) when triggered.

## Description

The invention relates to safety discharge circuit for discharging an electromagnetic interference (EMI) suppression capacitor.

In order to suppress electromagnetic interference, in most cases an input filter is required on the mains input of apparatus like switched mode power supplies (SMPS). In addition to an inductance, EMI filters typically include one or more capacitors connected between the mains input terminals. These capacitors are known as X capacitors. EMI filters typically also include one or more capacitances connected between one of the mains terminals and a protective earth. This type of capacitor is known as a Y capacitor. Typically, the protective earth takes the form of a secondary ground, to which the Y capacitors are connected, whereas the bridge rectifier is grounded to a separate primary ground; the primary and secondary grounds have mains separation, but may typically be connected by one or more additional Y capacitors.

It is desirable, and in some regulatory regimes it is mandatory, that the voltage between the mains terminals of an apparatus is reduced to a safe value within a certain time period after the apparatus is disconnected from the mains. Otherwise, there remains a risk of electrical shock to the user, by inadvertently contacting the terminals of the plug.

As examples, according to the international standard IEC60065 for audio, video and similar electronic apparatus, it is required that within 2 seconds of a power supply being unplugged, the voltage between the terminals should be less than 60 V. The same requirement holds for IEC62368. Further, according to IEC60950, the decrease should occur with a time constant of one second.

When the mains supply to the apparatus is disconnected, for instance by being unplugged from the mains, residual charge on the X capacitors and Y capacitors may initially result in a voltage which is above the safe level. If the power supply is operating and fully loaded, the load will in most instances rapidly result in the discharge of the charge on the capacitors.

However, under no-load conditions or under conditions where the mains voltage has fallen below acceptable levels (so-called "brownout" conditions), the power supply may have been disabled or switched off. Under such conditions, capacitances on the output side of the rectifier may prevent discharge of the X capacitor and Y capacitors, on the input side of the rectifier, to an acceptable level within an acceptable period.

It is known to provide an additional resistor discharge network in parallel with the mains input, in order to discharge the X capacitor and Y capacitors. However, resistive discharge solutions suffer the disadvantage that the resistors dissipate power. This power dissipation, which for a typical application may be between 20 and 100 mW, may be insignificant under full load conditions. However, under conditions of no-load, especially when taking into account current low standby power requirements, it is significant.

Active discharge solutions, which switch the resistive discharge network across the mains after detecting its disconnection from the apparatus, have been proposed. However, these solutions suffer from the disadvantage that either a dedicated integrated circuit is needed to detect disconnection, which is less cost-effective, or a large number of discrete devices are needed to perform the required task, resulting in a complex and potentially costly circuit, which occupies a significant volume.

According to a first aspect of the invention, there is provided a safety discharge circuit for discharging an electromagnetic interference (EMI) suppression capacitor, the circuit comprising an input for connection to an AC power source, and a triggering section adapted to detect disconnection of the AC power source from the input and trigger a bi-directional thyristor switch in response, the bi-directional thyristor switch being coupled to an output for connection to the EMI suppression capacitor, whereby the EMI suppression capacitor is discharged by the bi-directional thyristor switch when triggered.

By making use of a bi-directional thyristor switch to discharge the EMI suppression capacitor, the invention ensures that the discharge path (and thus, any related power dissipation of the discharge path) only conducts when required and not continuously. Furthermore, the triggering of bi-directional thyristor switches is straightforward, requiring only a few discrete components, and the bi-directional thyristor switch's latching action ensures that the EMI suppression capacitor is discharged well below the voltage required by safety standards without requiring any additional complexity in the triggering circuit to ensure this. In addition, since very few discrete components are required, the volume occupied by the circuit is low. The problems mentioned above are therefore overcome.

Typically, the AC power source is an AC mains supply, such as a 230V or 240V 50 Hz supply or a 120V 60 Hz supply.

Normally, the bi-directional thyristor switch is a TRIAC, or alternatively a pair of silicon controlled rectifiers (SCRs) coupled in inverse parallel. By "inverse parallel" we mean that the anode of one SCR is coupled to the cathode of the other SCR and vice-versa. The combined gate of the inverse- parallel pair of SCRs is formed by coupling the two gates of the individual SCRs together.

Typically, the bi-directional thyristor switch is coupled to the output in series with a current-limiting resistor. Thus, the bi-directional thyristor switch and current-limiting resistor may be together coupled in parallel with the EMI suppression capacitor.

The resistance of the current-limiting resistor is preferably selected such that the product of the resistance with the holding current of the bi-directional thyristor switch is less than a predefined safety voltage. A typical value for the predefined safety voltage might be 60 V according to IEC60950.

In a particularly preferred embodiment, the triggering section comprises a two-terminal break-over device, one terminal of which is coupled to the gate of the bi-directional thyristor switch and the other terminal of which is coupled to a detector circuit adapted to trigger the break-over device in response to detecting disconnection of the AC power source from the input.

Typically, the output and input are coupled together and the detector circuit comprises a time-delay resistor and capacitor in series, the time-delay resistor and capacitor together being coupled to the input. The time constant of the time-delay resistor and capacitor is normally selected to be larger than the AC period of the AC power source and less than a predefined safety time constant. This ensures that the capacitor does not charge up sufficiently from the mains during normal operation to trigger the break-over device, but will be charged up quickly enough to satisfy the relevant safety standards after disconnection of the AC power source. A typical value for the predefined safety time constant is 1 second, as specified in IEC60950. The time constant is typically in the range 20 milliseconds to 1 second, preferably 200 milliseconds to 500 milliseconds.

Preferably, the two-terminal break-over device is a DIAC. This provides a very straightforward way of triggering the bi-directional thyristor switch.

In one embodiment, the DIAC and bi-directional thyristor switch together form an integrated device. Where the bi-directional thyristor switch is a TRIAC, this integrated device may be a QUADRAC^{®} from Teccor Electronics.

In accordance with a second aspect of the invention, there is provided a power supply, such as a switched mode power supply (SMPS), comprising a safety discharge circuit according to the first aspect of the invention, and an EMI suppression capacitor coupled to the output such that the EMI suppression capacitor is discharged on disconnection of the AC power source.

Typically, the EMI suppression capacitor is an X capacitor connected directly across the AC power source.

In accordance with a third aspect of the invention, there is provided a method for discharging an electromagnetic interference (EMI) suppression capacitor, the method comprising detecting disconnection of an AC power source from an input to a safety discharge circuit and triggering a bi-directional thyristor switch in response, the bi-directional thyristor switch being coupled to an output of the safety discharge circuit for connection to the EMI suppression capacitor, whereby the EMI suppression capacitor is discharged by the bi-directional thyristor switch, when triggered.

The method may further comprise coupling the bi-directional thyristor switch to the output in series with a current-limiting resistor.

Typically, the method further comprises triggering the bi-directional thyristor switch with a two-terminal break-over device, for example a DIAC.

Examples of the invention will now be described in detail with reference to the accompanying drawings, in which:
Figure 1 shows a first embodiment of the invention;
Figure 2 shows a second embodiment of the invention; and
Figures 3a and 3b show the waveforms in the circuits of the first and second embodiments.

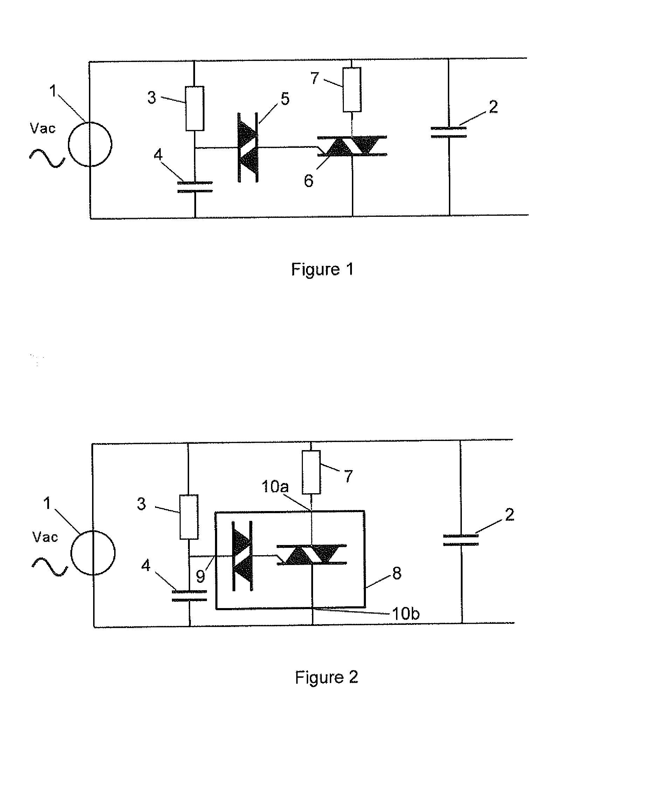

Figure 1 shows a first embodiment of a safety discharge circuit according to the invention. In Figure 1, an AC mains supply 1 is coupled to an electronic device comprising an EMI filter at its input. The EMI filter comprises an X capacitor 2 coupled directly across the mains supply 1.

The safety discharge circuit comprises a detection circuit made up of a time-delay resistor 3 and capacitor 4. The junction of the time-delay resistor 3 and capacitor 4 is coupled to a first terminal of a DIAC 5, the other terminal of which is coupled to the gate of a TRIAC 6.

A first main terminal of the TRIAC 6 is coupled to the AC mains supply 1 and X capacitor 2, whereas the second main terminal of TRIAC 6 is coupled to the AC mains supply 1 and capacitor 2 via a current-limiting resistor 7.

As long as the AC mains supply 1 is connected, capacitor 4 remains essentially discharged. This is because the RC time constant of time-delay resistor 3 and capacitor 4 is significantly larger than the AC mains frequency, which is typically 50 or 60Hz in most countries. Thus, the time constant of time-delay resistor 3 and capacitor 4 is significantly longer than 20 milliseconds (the period of a 50 Hz mains cycle), but also considerably shorter than the time constant required by the appropriate safety standards. Suitable values typically fall within the range of 200 milliseconds to 500 milliseconds.

When the AC mains supply 1 is disconnected, the energy stored in X capacitor 2 will charge capacitor 4 through time-delay resistor 3. The charge can be positive or negative depending on whether the voltage on X capacitor 2 is positive or negative when the AC mains supply 1 is disconnected. As soon as capacitor 4 is charged above the break-over voltage of DIAC 5, DIAC 5 will conduct current and trigger TRIAC 6. TRIAC 6 then discharges X capacitor 2 via current-limiting resistor 7.

Current-limiting resistor 7 is used to limit the current flowing through TRIAC 6 in case the AC mains supply 1 is reconnected whilst TRIAC 6 is conducting. If this occurs, TRIAC 6 will stop conducting as soon as the AC mains supply 1 voltage reaches the next zero crossing.

DIAC 5 and TRIAC 6 are particularly suitable for use in this type of circuit since they work for both positive and negative currents and voltages. This removes the need for additional rectifier elements as may be required in some prior art solutions.

The break-over voltage of DIAC 5, V_{BO}, will be chosen to satisfy the requirements of the relevant safety standards being applied. For example, in the case of IEC60950, the break-over voltage should be less than the 60V specified in IEC60950.

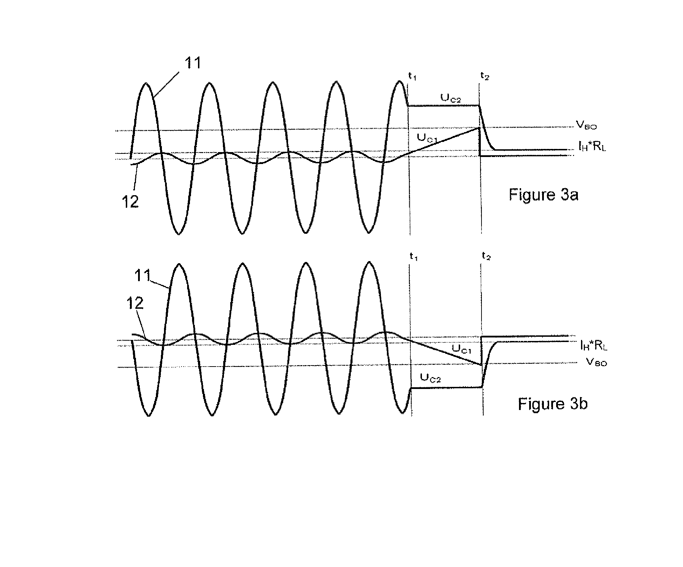

The break-over current of DIAC 5, I_{BO}, should be lower than the current through time-delay resistor 3 at the break-over point (t₂ in Figure 3) in order to guarantee triggering of T1. Thus, in the case of IEC60950 a suitable value for I_{BO} is given by: I_{BO} < (60V-V_{BO})/R_{T}, where R_{T} is the resistance of time-delay resistor 3.

The product of holding current of TRIAC 6, I_{H}, and the resistance of current-limiting resistor 7 should also be chosen to satisfy the requirements of the relevant safety standards. For example, in the case of IEC60950, this product should be lower than the 60V specified to guarantee a discharge to a voltage below 60V.

Figure 2 shows a second embodiment, in which the DIAC 5 and TRIAC 6 are replaced by a QUADRAC^{®} 8. The QUADRAC^{®} 8 is a single integrated device, which combines a DIAC with a TRIAC. The QUADRAC^{®} 8 has three terminals, a gate terminal 9 being coupled to the junction between time-delay resistor 3 and capacitor 4 and two main terminals 10a, 10b being coupled to the X capacitor 2 and current-limiting resistor 7 respectively. The operation of the second embodiment is identical to that of the first embodiment, but requires only four discrete components rather than five.

Figures 3a and 3b show the waveforms in the two circuits of Figures 1 and 2. The only difference is that at the moment of mains disconnection, t₁, the voltage is positive in Figure 3a, whereas it is negative in Figure 3b. In both cases, the waveform 11 represents the AC mains supply 1 voltage and the waveform 12 the voltage at the junction of time-delay resistor 3 and capacitor 4.

At moment t₁ the mains is disconnected. The remaining voltage on X capacitor 2 charges capacitor 4 (positively in Figure 3a and negatively in Figure 3b) until the break-over voltage V_{BO} of DIAC 5 (or QUADRAC 8) is reached at t₂. X capacitor 2 will then discharge through current-limiting resistor 7 and TRIAC 6 (or QUADRAC 8) to a voltage of I_{H}*R_{L}, where R_{L} is the resistance of current-limiting resistor 7.

Other variations to the disclosed embodiments can be understood and effected by those skilled in the art in practising the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. Any reference signs in the claims should not be construed as limiting the scope.

## Claims

1. A safety discharge circuit for discharging an electromagnetic interference (EMI) suppression capacitor (2), the circuit comprising an input for connection to an AC power source (1), and a triggering section adapted to detect disconnection of the AC power source from the input and trigger a bi-directional thyristor switch in response, the bi-directional thyristor switch being coupled to an output for connection to the EMI suppression capacitor (2), whereby the EMI suppression capacitor (2) is discharged by the bi-directional thyristor switch, when triggered.

2. A safety discharge circuit according to claim 1, wherein the bi-directional thyristor switch is a TRIAC (6).

3. A safety discharge circuit according to claim 1, wherein the bi-directional thyristor switch is a pair of silicon controlled rectifiers (SCRs) coupled in inverse parallel.

4. A safety discharge circuit according to any of the preceding claims, wherein the bi-directional thyristor switch is coupled to the output in series with a current-limiting resistor (7).

5. A safety discharge circuit according to claim 4, wherein the resistance of the current-limiting resistor (7) is selected such that the product of the resistance with the holding current of the bi-directional thyristor switch is less than a predefined safety voltage.

6. A safety discharge circuit according to any of the preceding claims, wherein the triggering section comprises a two-terminal break-over device, one terminal of which is coupled to the gate of the bi-directional thyristor switch and the other terminal of which is coupled to a detector circuit adapted to trigger the break-over device in response to detecting disconnection of the AC power source from the input.

7. A safety discharge circuit according to claim 6, wherein the output and input are coupled together and the detector circuit comprises a time-delay resistor (3) and capacitor (4) in series, the time-delay resistor (3) and capacitor (4) together being coupled to the input.

8. A safety discharge circuit according to claim 7, wherein the time constant of the time-delay resistor (3) and capacitor (4) is selected to be larger than the AC period of the AC power source (1) and less than a predefined safety time constant.

9. A safety discharge circuit according to claim 8, wherein the time constant is in the range 20 milliseconds to 1 second, preferably 200 milliseconds to 500 milliseconds.

10. A safety discharge circuit according to any of claims 6 to 9, wherein the two-terminal break-over device is a DIAC (5).

11. A safety discharge circuit according to claim 10, wherein the DIAC and bi-directional thyristor switch together form an integrated device (8).

12. A power supply, such as a switched mode power supply (SMPS), comprising a safety discharge circuit according to any of the preceding claims, and an EMI suppression capacitor (2) coupled to the output such that the EMI suppression capacitor (2) is discharged on disconnection of the AC power source (1).

13. A method for discharging an electromagnetic interference (EMI) suppression capacitor (2), the method comprising detecting disconnection of an AC power source from an input to a safety discharge circuit and triggering a bi-directional thyristor switch in response, the bi-directional thyristor switch being coupled to an output of the safety discharge circuit for connection to the EMI suppression capacitor (2), whereby the EMI suppression capacitor (2) is discharged by the bi-directional thyristor switch, when triggered.

14. A method according to claim 13, further comprising coupling the bi-directional thyristor switch to the output in series with a current-limiting resistor (7).

15. A method according to claim 13 or claim 14, further comprising triggering the bi-directional thyristor switch with a two-terminal break-over device, for example a DIAC (5).
